# FASCICULE DE BREVET EUROPEEN

(11) **EP 2 755 463 B1**
(45) Date de publication et mention de la délivrance du brevet: **21.11.2018**
(21) Numéro de dépôt: 12773030.7
(22) Date de dépôt: 12.09.2012
(51) Int. Cl.: A01G 9/033

(54) **CONTENANT POUR LA PLANTATION ET LA CULTURE DES VEGETAUX ET SON UTILISATION**
BEHÄLTER ZUM ZÜCHTEN VON PFLANZEN UND BENUTZUNG DESSELBEN
CONTAINER FOR PLANTING AND GROWING PLANTS AND USE OF THE SAME

(30) Priorité: 13.09.2011 FR 1158135
(43) Date de publication de la demande: 23.07.2014
(73) Titulaire: Ecovegetal, 28410 Broue (FR)
(72) Inventeur: GEORGEL, Pierre, 92220 Bagneux (FR)
(74) Mandataire: IPAZ
(86) Numéro de dépôt international: PCT/FR2012/052043
(87) Numéro de publication internationale: WO 2013/057398

(56) Documents cités:
- EP-A1- 1 741 332
- WO-A2-00/64253
- FR-A1- 2 686 769
- FR-A1- 2 917 572
- US-A- 4 854 075
- US-A- 4 926 587
- US-A1- 2002 066 227
- US-B1- 6 253 487
- US-B1- 6 606 823

## Description

La présente invention concerne un contenant pour la plantation et la culture des végétaux. Elle concerne également des structures réalisées avec de tels contenants, tels que des toitures et des sols végétalisés, ainsi que des utilisations de tels contenants.

Le domaine de l'invention est le domaine des contenants pour la plantation et la culture de végétaux, en particulier pour la réalisation de toitures, terrasses, et places de parking végétalisées sur dalle étanchée , mais également pour la réalisation de structures drainantes, telles que des surfaces drainantes pour la réalisation de voies perméables destinées à la circulation de piétons et de véhicules.

### Etat de la technique

Les structures, de types toits ou terrasses, végétalisées connaissent un développement important ces dernières années. En plus d'être agréables sur le plan paysager et social, de telles structures apportent des avantages sur le plan écologique et sanitaire. Ces structures apportent également des avantages techniques sur le plan de la durabilité et du confort des constructions en améliorant l'isolation phonique, le confort thermique d'été, la protection de l'étanchéité contre les chocs thermiques et les chocs mécaniques.

La plupart de ces structures sont construites en utilisant des modules végétalisés réalisés avec des contenants pour la plantation et la culture de végétaux. Ces modules végétalisés sont assemblés pour obtenir la surface désirée.

Les contenants végétalisés utilisés ont pour fonctions essentielles de constituer un réceptacle pour recevoir les fines du substrat et les semis de végétaux, de constituer une réserve d'eau pour ces végétaux et d'évacuer l'excédent d'eau vers l'extérieur du contenant.

Les contenants végétaux étant disposés sur les toits et également sur des zones piétonnes ou ouvertes à la circulation des véhicules sont soumis à des sollicitations mécaniques importantes.

Or, les contenants actuels, tels que décrits par FR 2 686 769 A1 par exemple, présentent plusieurs inconvénients.

Les contenants actuels présentent des tenues mécaniques qui ne sont pas suffisantes pour résister aux sollicitations extérieures et nécessitent d'être renforcés par des dispositifs additionnels.

Par ailleurs, bien qu'étant prévus pour être utilisés sous forme de modules végétalisés pour la réalisation de surface de formes variées, les contenants actuels ne peuvent pas être découpés sans perdre soit en fonctionnalité soit en tenue mécanique ou les deux.

En outre, les contenants actuels ne permettent pas de varier les types de végétaux cultivés, sans les mélanger. Il n'est donc pas possible, avec les contenants actuels de réaliser une culture séparée et indépendante de plusieurs variétés de végétaux sur des substrats adaptés à chaque type de plante.

Un but de la présente invention est de remédier aux inconvénients précités.

Un autre but de l'invention est de proposer un contenant pour la plantation et la culture de végétaux présentant une meilleure tenue mécanique que les contenants actuels.

Encore un autre but de l'invention est de proposer un contenant pour la plantation et la culture de végétaux plus modulaire que les contenants actuels tout en gardant sa fonctionnalité et sa tenue mécanique.

Enfin, un autre but de l'invention est de proposer un contenant pour la plantation et la culture de végétaux permettant de réaliser une culture séparée et indépendante de plusieurs variétés de végétaux sur plusieurs types de substrats.

### Exposé de l'invention

L'invention propose d'atteindre au moins l'un des buts précités par un contenant pour la plantation et la culture de végétaux selon la revendication 1. Il se présente sous la forme d'un ensemble monobloc, comprenant une pluralité de cavités de plantation et de culture :
- chacune desdites cavités étant séparée des autres cavités par au moins une cloison, dite de séparation, s'étendant sur toute la périphérie de ladite cavité ; et
- chaque cavité comprenant :
   ∘ une paroi de fond, prévue pour recevoir le substrat de culture et les végétaux par exemple, et
   ∘ au moins une ouverture d'évacuation d'eau de ladite cavité à l'extérieur dudit contentant.

Selon l'invention, l'ouverture d'évacuation réalise une évacuation d'eau excédentaire vers l'extérieur du contenant indépendamment des autres cavités et sans passer par les autres cavités ou sans passer par un conduit traversant au moins une partie d'une autre cavité.

L'invention propose donc un contenant compartimenté comprenant plusieurs alvéoles de culture ou de plantation indépendantes les unes des autres.

Un tel contenant selon l'invention présente une meilleure tenue mécanique que les contenants de l'état de la technique. En effet, les cloisons de séparation permettent de reprendre les efforts induits par la végétalisation, en particulier par la végétalisation en pente, ainsi que les efforts extérieurs et de distribuer ces efforts sur l'ensemble du contenant et sur les dispositifs de fixation sur toute la longueur, la largeur et la hauteur du contenant.

Le contenant selon l'invention est plus modulaire que les contenants de l'état de la technique. En effet, grâce à des cavités de plantation et de culture indépendantes, le contenant peut être découpé pour obtenir la forme souhaitée sans perdre la fonctionnalité du contenant. De plus, les cloisons de séparation participant à la tenue mécanique, le contenant peut être découpé pour obtenir la forme souhaitée sans perte ou avec peu de perte en tenue mécanique.

En outre, le contenant selon l'invention permet de réaliser une culture séparée et indépendante de plusieurs variétés de végétaux de type géophytes fixes dans le même contenant sans que ces variétés se mélangent. Les cavités de plantation et de culture étant indépendantes et séparées par les cloisons de séparation, il y a peu de risque que les différentes variétés de végétaux se mélangent.

De plus, le contenant selon l'invention permet une maintenance plus simple que les contenants de l'état de la technique. En effet, lorsque la végétation se trouvant dans une cavité de culture est endommagée, il est simple de traiter ou de remplacer cette végétation car la cavité est bien délimitée par les cloisons de séparation.

Plus encore, le contenant selon l'invention permet de limiter les risques de dégradation ou de contamination biologique de la végétation se trouvant dans le contenant. En effet, lorsque la végétation se trouvant dans une cavité est dégradée par un facteur biologique extérieur, cette dégradation reste cloisonnée à cette cavité et ne se propage pas à toute la végétation se trouvant dans le contenant. Ainsi, le contenant selon l'invention permet, par exemple, de limiter le développement des plantes ligneuses adventices, en particulier dans les végétations extensives et/ou semi-intensives.

Le contenant selon l'invention permet également une réalisation plus simple de structures en pente, par exemple une toiture végétalisée en pente, car les cloisons de séparation participent à la retenue du substrat lorsque le contenant est disposé sur une surface en pente.

Dans une version avantageuse du contenant selon l'invention, pour au moins une cavité, au moins une ouverture d'évacuation peut être disposée en une position se trouvant à une distance non-nulle de la paroi de fond de ladite cavité.

Avantageusement, l'ouverture d'évacuation, peut se trouver à une distance/hauteur comprise entre 12mm à 20cm de la paroi de fond. Dans un mode de réalisation préféré, l'ouverture d'évacuation se trouve à une distance de 30 mm de la paroi de fond.

Selon l'invention, l'ouverture d'évacuation d'eau est arrangée à une distance non nulle de la paroi de fond de sorte que le contenant permet de se passer d'une couche filtrante indispensable dans les contenants de l'état de la technique. En effet, dans ce cas, le substrat de culture et les fines (fractions de substrat dont les particules sont inférieures à 2mm) peuvent être déposés sur la paroi de fond de la cavité et occuper tout l'espace/la hauteur se trouvant entre la paroi de fond et le niveau de l'ouverture d'évacuation, sans risque d'être entraîné par l'eau et tout en restant disponible pour les plantes se trouvant dans la cavité. Dans ce cas, la couche filtrante, utilisée dans les contenants de l'état de la technique et dont la fonction est de retenir les fines du substrat, n'a plus d'utilité.

Selon l'invention, l'eau nécessaire à la culture des plantes est emmagasinée et stockée dans l'épaisseur du substrat se trouvant dans la cavité, permettant ainsi une irrigation directe par capillarité.

En outre, l'ouverture d'évacuation d'eau se trouvant à une distance non nulle de la paroi de fond, le fond du contenant peut être disposé en dessous d'un niveau d'eau stagnante, par exemple sur une toiture ou une terrasse, sans mettre les racines en situation d'asphyxie racinaire.

Dans tous les cas, l'ouverture d'évacuation se trouve en dessous de l'extrémité supérieure la plus basse de la cloison de séparation de sorte que l'eau excédentaire soit évacuée par cette ouverture d'évacuation et ne passe pas dans une autre cavité en débordant par le dessous de la cloison de séparation.

Dans une version particulière du contenant selon l'invention, au moins une ouverture d'évacuation peut être de forme oblongue, par exemple une ouverture oblongue s'étendant suivant un plan parallèle au plan de la paroi de fond.

Une telle ouverture oblongue peut avoir une longueur comprise entre 3mm et 50mm. Dans une version préférée, l'ouverture oblongue a une longueur de 2.6cm et une largeur inférieure ou égale à 3mm.

Avantageusement, quelle que soit sa forme, l'ouverture d'évacuation peut avoir une largeur inférieure ou égale à 3mm. Une telle ouverture permet de limiter le racinaire des ligneux par un effet de pincement du racinaire et ainsi de limiter le développement des plantes ligneuses et de leur volume aérien.

Dans un exemple de réalisation préféré, l'ouverture d'évacuation peut avoir une largeur de 2mm. Une telle ouverture permet une évacuation efficace de l'eau excédentaire en dehors de la cavité tout en limitant le développement des plantes ligneuses par pincement du racinaire.

Dans une version avantageuse du contenant selon l'invention, au moins une cavité peut comprendre au moins un bossage sur lequel est disposée au moins une ouverture d'évacuation.

Un tel bossage participe également à la tenue mécanique du contenant.

Avantageusement, le bossage peut présenter une surface parallèle à la paroi de fond et l'ouverture d'évacuation peut être aménagée sur cette paroi.

Dans un mode de réalisation préféré, pour au moins une cavité, au moins un bossage peut être disposé à l'intersection de la paroi de fond et de la cloison de séparation de ladite cavité.

Une telle construction permet d'améliorer encore plus la tenue mécanique du contenant selon l'invention.

Toujours dans un mode de réalisation préféré, le contenant selon l'invention peut comprendre plusieurs cavités adjacentes, chaque cavité comprenant un bossage disposé à l'intersection de ladite cavité avec au moins une autre cavité.

Par « cavités adjacentes » on entend au moins deux cavités dont au moins une cloison de séparation se touchant, ou encore deux cavités comprenant une cloison de séparation en partie commune.

Une telle construction permet d'améliorer encore plus la tenue mécanique du contenant selon l'invention, tout en améliorant l'exploitation de l'espace à l'intérieur du contenant et en diminuant la quantité de matériau utilisée pour fabriquer le contenant. En effet la disposition adjacente de plusieurs cavités permet d'utiliser une même cloison comme cloison de séparation pour plusieurs cavités.

Le fait de disposer le bossage au niveau de l'intersection de plusieurs cavités permet également d'améliorer la tenue mécanique du contenant en distribuant les sollicitations mécaniques sur plusieurs cavités de manière horizontale et verticale.

Avantageusement, le contenant selon l'invention peut comprendre au moins trois cavités adjacentes, chaque cavité comprenant un bossage disposé à l'intersection de ladite cavité avec les deux autres cavités.

Ainsi, les bossages de ces trois cavités sont disposés en étoile et permettent de distribuer les sollicitations mécaniques selon au moins trois directions différentes.

Avantageusement, le contenant selon l'invention peut comprendre sur la surface extérieure de sa paroi de fond, un circuit d'évacuation d'eau lorsqu'il est posé sur un sol plat avec ou sans pente.

Selon l'invention, au moins un bossage d'au moins une cavité peut être creuse, au moins en sa partie basse, constituant ainsi sur la surface extérieure de la paroi de fond du contenant au moins une portion d'un circuit d'évacuation d'eau.

En outre, au moins une cloison de séparation d'au moins une cavité peut également être au moins en partie creuse, constituant sur la surface extérieure de la paroi de fond dudit contenant au moins une portion d'un circuit d'évacuation d'eau.

La cloison de séparation d'une cavité peut être creuse sur toute sa hauteur.

Dans un mode de réalisation préféré, la cloison de séparation d'une cavité peut être creuse sur une hauteur égale à la hauteur d'un bossage se trouvant dans ladite cavité, et en particulier un bossage se trouvant en contact avec ladite cloison.

Dans un mode de réalisation du contenant selon l'invention, le contenant peut comprendre des cavités adjacentes, chacune des cavités comprenant :
- au moins une cloison de séparation creuse, et en particulier toutes les cloisons de séparation sont creuses, et
- un ou plusieurs bossages creux, et en particulier tous les bossages sont creux, chacun desdits bossages comportant au moins une ouverture d'évacuation et étant disposé contre une cloison de séparation creuse,
les bossages creux et les cloisons de séparation creuses d'une même cavité et de cavités adjacentes communiquant entre-elles et constituant ainsi un circuit d'évacuation d'eau continue sur la surface extérieure de la paroi de fond dudit contenant sur toute la largeur et/ou toute la longueur du contenant.

Dans une version avantageuse du contenant selon l'invention, les cavités peuvent être disposées de manière décalée, de sorte qu'au moins une cavité est décalée par rapport à une cavité adjacente.

Ainsi, au moins deux cloisons de séparation s'apparentant chacune à deux cavités adjacentes sont décalées l'une par rapport à l'autre, ce qui permet d'augmenter la tenue mécanique du contenant en distribuant les efforts de manière plus uniforme sur toute la surface du contenant.

Au moins deux cavités peuvent présenter la même forme, ou deux formes différentes.

Au moins deux cavités peuvent présenter les mêmes dimensions, ou des dimensions différentes.

Au moins deux cavités peuvent présenter la même hauteur ou des hauteurs différentes.

Au moins deux cavités peuvent présenter la même section ou des sections différentes.

Au moins une cavité peut être de section carrée, triangulaire, rectangulaire, ronde, elliptique, ou une forme présentant plus de quatre côtés/arrêtes.

Dans une version particulièrement avantageuse, au moins une cavité peut présenter une section de forme hexagonale. Dans cette version, le contenant peut comporter plusieurs points/arrêtes d'intersection, réalisant chacun(e) l'intersection de trois cavités adjacentes hexagonales.

Dans le cas où, les cavités présentent une section comportant des coins/arrêtes, par exemple une section hexagonale, chaque cavité peut comprendre un bossage disposé à chaque coin/arrête de ladite cavité.

Le contenant selon l'invention peut en outre comprendre deux ou plus de deux renfoncements ou évidements disposés en deux positions sensiblement opposées sur la périphérie dudit contenant et agencés pour constituer une zone de prise dudit contenant en vue de le manipuler. Ainsi, l'ergonomie d'utilisation, de manipulation du contenant, surtout lorsque le contenant est manipulé après être chargé, est augmentée.

Avantageusement, le contenant selon l'invention peut comporter un fond plat, c'est-à-dire aucune forme en saillie sur la surface extérieure de la paroi de fond du contenant qui pourrait exercer un effort localisé sur une cavité lorsque le contenant est posé sur une surface plate et ainsi l'abîmer.

Le contenant selon l'invention peut en outre comprendre des cavités de tailles différentes, la cloison séparant deux cavités de tailles différentes pouvant comprendre une ouverture de passage de végétaux depuis la cavité de plus petite taille vers la cavité de plus grande taille.

Par exemple, une cavité de plus petite taille peut être une cavité incomplète due d'une part à la forme générale du contenant et d'autre part à la forme des cavités.

Ainsi, lorsque par exemple les cavités sont de section hexagonale et le contenant de section rectangulaire, le contenant comportera forcément des cavités incomplètes sur les bords/périphérie du contenant.

Le contenant selon l'invention peut présenter une section carrée, triangulaire, rectangulaire, ronde, elliptique, ou une forme présentant plus de quatre côtés/arrêtes.

Le substrat utilisé pour la réalisation de culture et de plantation peut comprendre de la laine de roche minérale, par exemple en végétalisation extensive et semi-intensive, en particulier par une toiture végétalisée.

Le contenant selon l'invention peut être dimensionné de telle manière que, lorsqu'il est remplit par un contenu prédéterminé de caractéristiques données, l'ensemble contenant+contenu présente un poids compris entre 13kg et 170kg, et de 1,42kg à vide. Un poids minimum de 65kg/m² à sec de l'ensemble contenant+contenu permet de traiter les angles et les périphéries de toits ou de terrasses, lorsque ces derniers sont exposés à des vents forts.

Le contenant selon l'invention peut être fabriqué en un mélange de PEBD/PEHD/PP, préférentiellement recyclable, et peut être fabriqué par moulage.

Selon un autre aspect de l'invention, il est prévu une structure réalisée avec des contenants selon l'une quelconque des revendications précédentes.

Une telle structure peut être une toiture végétalisée, des places de parking végétalisées ou une terrasse végétalisée.

Une telle structure peut également être une structure drainante végétalisée ou non, telles que des dalles drainantes pour la réalisation de voies perméables destinées à la circulation des piétons et/ou des véhicules.

Le contenant selon l'invention peut en outre être utilisé comme élément de retenue temporaire et régulation de débit d'eau, par exemple des eaux pluviales.

Le contenant selon l'invention peut en outre être utilisé pour la réalisation de coffrages perdus et ainsi varier les aménagements, par exemple sur des terrasses multi usages.

Le contenant selon l'invention peut en outre être utilisé pour délimiter les accès techniques, par exemple lorsqu'il est remplit par du gravillon.

D'autres avantages et caractéristiques apparaîtront à l'examen de la description détaillée de modes de réalisation nullement limitatifs, et des dessins annexés sur lesquels :
- la FIGURE 1 est une représentation isométrique vue de dessus d'un contenant selon l'invention ;
- la FIGURE 2 est une représentation isométrique vue de dessus d'une cavité du contenant de la figure 1 ;
- la FIGURE 3 est une représentation isométrique en coupe vue de dessus d'une cavité du contenant de la figure 1 ;
- la FIGURE 4 est une représentation isométrique en coupe vue de dessous d'une cavité du contenant de la figure 1 ; et
- la FIGURE 5 est une représentation isométrique vue de dessous du contenant de la figure 1.

Sur les figures et dans la suite de la description, les éléments communs à plusieurs figures conservent la même référence.

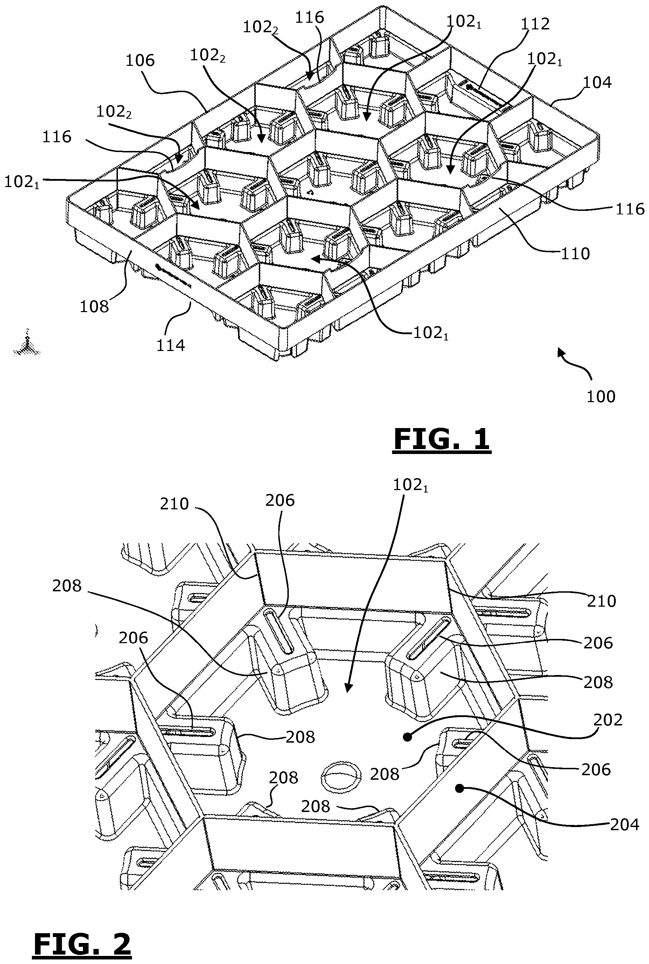

La FIGURE 1 est une représentation isométrique d'un contenant 100 selon l'invention.

La FIGURE 2 est une représentation isométrique d'une cavité complète 102 du contenant 100 de la figure 1.

Le contenant 100 représenté sur la figure 1 se présente sous la forme d'un ensemble monobloc rectangulaire.

Le contenant 100 comprend une pluralité de cavités de culture 102, adjacentes et de section hexagonale. Dans l'exemple représenté sur les figures, le contenant comprend cinq cavités 102₁ hexagonales complètes identiques, et 12 cavités 102₂ hexagonales incomplètes se trouvant en contact avec les parois périphériques 104-110 du contenant 100.

En référence à la figure 2, chaque cavité 102 comprend une paroi de fond 202, prévue pour recevoir un substrat de culture et de plantation, et une cloison de séparation 204 de la cavité 102 des cavités 102 adjacentes et entourant la cavité sur toute sa périphérie et sur toute la hauteur de la cavité.

Chaque cavité 102, comprend également plusieurs ouvertures d'évacuation d'eau 206, chacune des ouvertures étant disposée sur un bossage 208, à une distance non nulle de la paroi de fond 202. Chaque bossage 208 est disposé au niveau d'une arrête/coin 210 de la cavité 102 à l'intersection de la paroi de fond 202 et de la cloison de séparation 204 de sorte à rejoindre la paroi de fond 202 de la cavité 102 avec la cloison de séparation 204 de la cavité 102.

Dans l'exemple représenté, chaque bossage 208 est de section sensiblement rectangulaire et chaque ouverture d'évacuation 206 est de forme oblongue.

Chaque cavité 102 comprend autant d'ouvertures d'évacuation 206 que de coin/arrêtes. Par exemple, sur l'exemple représenté, une cavité 102 complète comporte 6 ouvertures d'évacuation 206 disposées sur six bossages 208, qui eux-mêmes sont disposés au niveau de six arrêtes 210 de la cavité 102.

En référence à la figure 1, les cloisons de séparation 204 sont également de section hexagonale complète pour les cavités 102₁ complètes et de section hexagonale incomplète pour les cavités 102₂ incomplètes. Par ailleurs, pour les cavités incomplètes 102₂, une partie de la cloison de séparation est réalisée par les parois périphériques 104-110 du contenant 100.

Par ailleurs, toutes les cavités 102, complètes ou incomplètes, du contenant 100 sont des cavités adjacentes de sorte qu'au moins une partie d'une cloison de séparation 204 d'une cavité est également une partie de la cloison de séparation de la cavité 102 adjacente.

Toujours en référence à la figure1, les cavités de plantation et de culture 102 sont disposées de manière décalée dans le sens de la largeur, c'est-à-dire dans la direction définie par les parois périphériques 104 et 108 de plus petite longueur du contenant 100.

Le contenant 100 comprend en outre des zones de prises 112 et 114 disposées sur les parois périphériques opposées de plus petite taille 104 et 108. Ces zones de prise 112 et 114 se présentent chacune sous la forme d'un renforcement/évidement réalisé dans les parois 104 et 108.

Par ailleurs, lorsqu'une paroi incomplète 102₂ est trop petite, la cloison de séparation 204 séparant cette cavité incomplète 102₂ d'une cavité complète 102₁ comprend une ouverture de passage 116, aménagée dans la partie haute de la cloison de séparation 204 et permettant aux plantes se trouvant dans la cavité incomplète 102₂ de passer vers la cavité complète 102₁.

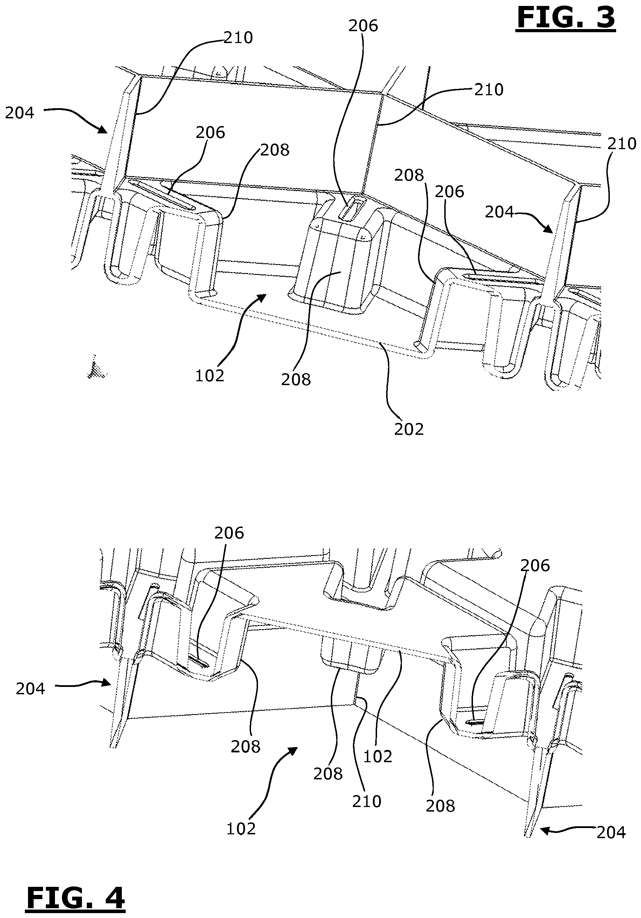

La FIGURE 3 est une représentation isométrique en coupe, vue de dessus, d'une cavité complète 102 du contenant 100 de la figure 1.

Tel que représenté sur la figure 3, chaque bossage 208 comportant une ouverture d'évacuation 206 est creux et ouvert vers l'extérieur du côté de la face extérieure de la paroi de fond du contenant 100.

De même, chaque cloison de séparation 208 est creuse sur une hauteur égale à la hauteur des bossages 208. La cloison de séparation 208 creuse est également ouverte vers l'extérieur du côté de la surface extérieure de la paroi de fond du contenant 100.

La FIGURE 4 est une représentation isométrique en coupe, vue de dessous, d'une cavité complète 102 du contenant 100 de la figure 1.

On voit clairement sur cette figure que les bossages 208 comportant les ouvertures d'évacuation 206 sont creux. La cloison de séparation 204 de la cavité 102 est également creuse sur une hauteur égale à la hauteur du bossage 208. On voit également que les bossages creux 208 ainsi que la cloison de séparation creuse 202 sont ouverts vers l'extérieur du côté de la face extérieure de la paroi de fond du contenant 100.

Par ailleurs, tels que représentés sur la figure 4, la cloison de séparation 204 creuse et les bossages 208 creux communiquent entre eux et créent un circuit d'évacuation d'eau provenant des ouvertures d'évacuation 206.

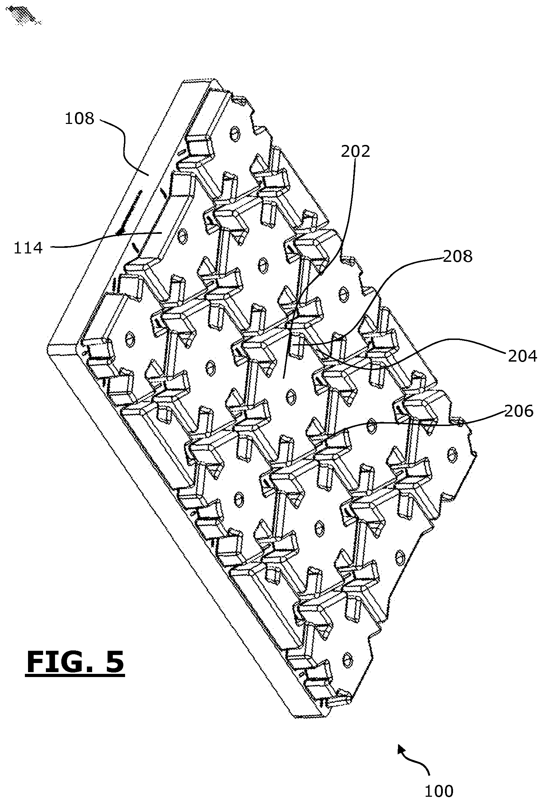

La FIGURE 5 est une représentation isométrique vue de dessous du contenant 100 de la figure 1.

On remarque que tous les bossages 208 sont creux et toutes les cloisons de séparation 204 sont également creuses et communiquent entre eux. L'ensemble des bossages creux et des cloisons creuses réalisent un circuit d'évacuation d'eau sur toute la largeur et sur toute la longueur du contenant 100 avec plusieurs sorties sur chacun des bords 104-110 du contenant 100.

De plus, la surface extérieure de la paroi de fond de chacune des cavités et du contenant est plate et ne comporte aucune forme en saillie.

Dans un exemple particulier de réalisation nullement limitatif :
- l'épaisseur des parois du contenant est de 2mm,
- la hauteur d'une cloison de séparation, par rapport à la paroi de fond est comprise entre 40mm et 500mm, et est préférentiellement de 65mm,
- la hauteur d'un bossage est comprise entre 12mm et 200mm, et est préférentiellement de 30mm,
- la hauteur d'une ouverture de passage 116 est comprise entre 5mm et 3cm,
- la largeur de l'ouverture d'évacuation est inférieure ou égale à 3mm, et préférentiellement de 2mm,
- la largeur d'une cavité est comprise entre 15 et 30cm, et
- les dimensions du contenant sont comprises entre 600mm sur 400mm et 1200mm sur 1200mm. Dans le cas d'une application particulière les dimensions sont préférentiellement de 600mm sur 400mm pour une hauteur de 65mm.

Bien entendu l'invention n'est pas limitée aux exemples qui viennent d'être décrits. Les dimensions et la forme des cavités, des ouvertures de passage, des bossages, du contenant peuvent être différentes. Les cavités peuvent être de dimensions et de formes identiques ou différentes.

## Revendications

1. Contenant (100) pour la plantation et la culture de végétaux, se présentant sous la forme d'un ensemble monobloc, comprenant une pluralité de cavités (102) de plantation et de culture, chacune des cavités (102) :
- étant séparée des autres cavités (102) par au moins une cloison (204), dite de séparation, s'étendant sur toute la périphérie de ladite cavité (102) ; et
- comprenant :
∘ une paroi (202) de fond, et
∘ au moins une ouverture (206) d'évacuation d'eau de ladite cavité (102) à l'extérieur dudit contentant (100) ;
**caractérisé en ce que** ladite au moins une ouverture d'évacuation (206) est disposée en une position se trouvant à une distance non-nulle au-dessus de la paroi de fond (202) de ladite cavité (102), de sorte à emmagasiner et stocker de l'eau dans l'épaisseur d'un substrat se trouvant dans ladite cavité.

2. Contenant selon la revendication 1, **caractérisé en ce que** l'au moins une ouverture d'évacuation (206) se trouve à une distance/hauteur de la paroi de fond comprise entre 12mm et 20cm, et plus particulièrement de 30mm.

3. Contenant (100) selon l'une quelconque des revendications précédentes, **caractérisé en ce qu'**au moins une ouverture d'évacuation (206) est oblongue.

4. Contenant (100) selon l'une quelconque des revendications précédentes, **caractérisé en ce qu'**au moins une cavité (102) comprend au moins un bossage (208) sur lequel est disposée au moins une ouverture d'évacuation (206).

5. Contenant selon la revendication 4, **caractérisé en ce que**, pour au moins une cavité (102), au moins un bossage (208) est disposé à l'intersection de la paroi de fond (202) et de la cloison de séparation (204).

6. Contenant (100) selon l'une quelconque des revendications 4 ou 5, **caractérisé en ce qu'**il comprend plusieurs cavités (102) adjacentes, chaque cavité (102) comprenant un bossage (208) disposé à l'intersection de ladite cavité (102) avec au moins une autre cavité (102) adjacente.

7. Contenant (100) selon l'une quelconque des revendications 4 à 6, **caractérisé en ce qu'**il comprend au moins trois cavités (102) adjacentes, chaque cavité (102) comprenant un bossage (208) disposé à l'intersection de ladite cavité (102) avec les deux autres cavités (102) adjacentes.

8. Contenant (100) selon l'une quelconque des revendications 4 à 7, **caractérisé en ce qu'**au moins un bossage (208) est au moins en partie creux, constituant sur la surface extérieure de la paroi de fond dudit contenant (100) au moins une partie d'un circuit d'évacuation d'eau.

9. Contenant (100) selon l'une quelconque des revendications précédentes, **caractérisé en ce qu'**au moins une cloison de séparation (204) est au moins en partie creuse, constituant sur la surface extérieure de la paroi de fond dudit contenant (100) au moins une partie d'un circuit d'évacuation d'eau.

10. Contenant (100) selon l'une quelconque des revendications précédentes, **caractérisé en ce qu'**au moins une cavité (102) est de section hexagonale.

11. Contenant (100) selon les revendications 5 et 10, **caractérisé en ce que** chaque cavité (102) comprend un bossage (208) disposé à chaque coin de ladite cavité hexagonale (102).

12. Contenant (100) selon l'une quelconque des revendications précédentes, **caractérisé en ce qu'**il comprend deux renfoncements/évidements (114, 116) disposés en deux positions sensiblement opposées sur la périphérie (104, 108) dudit contenant (100) et agencés pour constituer une zone de prise dudit contenant (100) en vue de le manipuler.

13. Contenant (100) selon l'une quelconque des revendications précédentes, **caractérisé en ce qu'**il comprend un fond plat.

14. Contenant (100) selon l'une quelconque des revendications précédentes, **caractérisé en ce qu'**il comprend des cavités (102₁, 102₂) de taille différente, la cloison de séparation (204) séparant deux cavités (102₁, 102₂) de tailles différentes comprend une ouverture de passage (116) de végétaux depuis la cavité (102₂) plus petite vers la cavité (102₁) plus grande.

15. Structure réalisée avec des contenants (100) selon l'une quelconque des revendications précédentes.

16. Utilisations d'un contenant (100) selon l'une quelconque des revendications 1 à 14 pour :
- la réalisation d'élément de retenue temporaire d'eau, par exemple des eaux pluviales,
- la réalisation de coffrages perdus, par exemple sur des terrasses multi usages, ou
- la limitation d'accès techniques, par exemple lorsqu'il est rempli par du gravillon.

## Patentansprüche

1. Behälter (100) für das Einpflanzen und den Anbau von Pflanzen, als einstückige Anordnung ausgebildet, mit einer Vielzahl von Hohlräumen (102) zum Einpflanzen und Anbau, wobei die jeweiligen Hohlräume (102):
- von den anderen Hohlräumen (102) durch mindestens eine sogenannte Trennwand (204) getrennt sind, welche sich auf dem gesamten Umfang des Hohlraums (102) erstreckt; und
- umfassend:
∘ eine Bodenwand (202); und
∘ mindestens eine Öffnung (206) zum Abfluss von Wasser aus dem Hohlraum (102) nach außerhalb des Behälters (100);
**dadurch gekennzeichnet, dass** die mindestens eine Abflussöffnung (206) an einer Stelle angeordnet ist, die sich in einem Abstand nicht gleich Null oberhalb der Bodenwand (202) des Hohlraums (102) befindet, sodass Wasser in der Dicke eines im Hohlraum gelagerten Substrats gespeichert und aufbewahrt wird.

2. Behälter nach Anspruch 1, **dadurch gekennzeichnet, dass** die mindestens eine Abflussöffnung (206) in einem Abstand/einer Höhe zu der Bodenwand gelagert ist, welche zwischen 12 mm und 20 cm, insbesondere 30 mm beträgt.

3. Behälter (100) nach einem der vorhergehenden Ansprüche, **dadurch gekennzeichnet, dass** mindestens eine Abflussöffnung (206) länglich ist.

4. Behälter (100) nach einem der vorhergehenden Ansprüche, **dadurch gekennzeichnet, dass** mindestens ein Hohlraum (102) mindestens einen Buckel (208) umfasst, an welchem mindestens eine Abflussöffnung (206) angeordnet ist.

5. Behälter (100) nach Anspruch 4, **dadurch gekennzeichnet, dass** für mindestens einen Hohlraum (102) mindestens ein Buckel (208) an der Kreuzung zwischen der Bodenwand (202) und der Trennwand (204) angeordnet ist.

6. Behälter (100) nach einem der Ansprüche 4 oder 5, **dadurch gekennzeichnet, dass** er mehrere angrenzende Hohlräume (102) umfasst, wobei die Hohlräume (102) jeweils einen Buckel (208) umfassen, der an der Kreuzung zwischen dem Hohlraum (102) und mindestens einem weiteren angrenzenden Hohlraum (102) angeordnet ist.

7. Behälter (100) nach einem der Ansprüche 4 bis 6, **dadurch gekennzeichnet, dass** er mindestens drei angrenzende Hohlräume (102) umfasst, wobei die Hohlräume (102) jeweils einen Buckel (208) umfassen, der an der Kreuzung zwischen dem Hohlraum (102) und den anderen beiden angrenzenden Hohlräumen (102) angeordnet ist.

8. Behälter (100) nach einem der Ansprüche 4 bis 7, **dadurch gekennzeichnet, dass** wenigstens ein Buckel (208) mindestens teilweise hohl ist, wobei er an der Außenfläche der Bodenwand des Behälters (100) mindestens einen Teil eines Wasserabflusssystems ausbildet.

9. Behälter (100) nach einem der vorhergehenden Ansprüche, **dadurch gekennzeichnet, dass** wenigstens eine Trennwand (204) mindestens teilweise hohl ist, wobei sie an der Außenfläche der Bodenwand des Behälters (100) mindestens einen Teil eines Wasserabflusssystems ausbildet.

10. Behälter (100) nach einem der vorhergehenden Ansprüche, **dadurch gekennzeichnet, dass** mindestens ein Hohlraum (102) im Querschnitt sechskantig ist.

11. Behälter (100) nach den Ansprüchen 5 und 10, **dadurch gekennzeichnet, dass** die Hohlräume (102) jeweils einen an jedem Winkel des sechskantigen Hohlraums (102) angeordneten Buckel (208) umfassen.

12. Behälter (100) nach einem der vorhergehenden Ansprüche, **dadurch gekennzeichnet, dass** er zwei Einsenkungen/Ausnehmungen (112, 114) umfasst, welche an zwei im Wesentlichen gegenüberliegenden Stellen auf dem Umfang (104, 108) des Behälters (100) angeordnet und dazu eingerichtet sind, einen Angriffsbereich des Behälters (100) zu dessen Handhabung auszubilden.

13. Behälter (100) nach einem der vorhergehenden Ansprüche, **dadurch gekennzeichnet, dass** er einen flachen Boden umfasst.

14. Behälter (100) nach einem der vorhergehenden Ansprüche, **dadurch gekennzeichnet, dass** er Hohlräume (102₁, 102₂) unterschiedlicher Größe umfasst, und die zwei Hohlräume (102₁, 102₂) unterschiedlicher Größen trennende Trennwand (204) eine Durchlassöffnung (116) für Pflanzen aus dem kleineren Hohlraum (102₂) heraus in den größeren Hohlraum (102₁) hinein umfasst.

15. Aufbau hergestellt aus Behältern (100) nach einem der vorhergehenden Ansprüche.

16. Verwendungen eines Behälters (100) nach einem der Ansprüche 1 bis 14 zu folgenden Zwecken:
- zur Herstellung von Elementen zur zeitweisen Wasserspeicherung, wie zum Beispiel für Regenwasser;
- zur Herstellung von verlorenen Schalungen wie zum Beispiel auf Mehrzweckterrassen; oder
- zur Einschränkung von technischen Zugängen wie zum Beispiel, wenn er mit Kies aufgefüllt ist.

## Claims

1. A container (100) for the planting and growing of plants, in the form of a unit assembly, comprising a plurality of cavities (102) for planting and growing, each of the cavities (102):
- being separated from the other cavities (102) by at least one partition (204), called separation partition, extending over the whole periphery of said cavity (102); and
- comprising:
∘ a bottom wall (202), and
∘ at least one outlet opening (206) for draining water from said cavity (102) to the outside of said container (100);
**characterized in that** said at least one outlet opening (206) is arranged in a position located at a non-zero distance above the bottom wall (202) of said cavity (102), so as to accumulate and store water in the thickness of a substrate located in said cavity.

2. The container according to claim 1, **characterized in that** the at least one outlet opening (206) is located at a distance/height from the bottom wall comprised between 12mm and 20cm, and more particularly 30mm.

3. The container (100) according to any one of the preceding claims, **characterized in that** at least one outlet opening (206) is oblong.

4. The container (100) according to any one of the preceding claims, **characterized in that** at least one cavity (102) comprises at least one projection (208) on which is arranged at least one outlet opening (206).

5. The container according to claim 4, **characterized in that**, for at least one cavity (102), at least one projection (208) is arranged at the intersection of the bottom wall (202) and the separation partition (204).

6. The container (100) according to any one of claims 4 or 5, **characterized in that** it comprises several adjacent cavities (102), each cavity (102) comprising a projection (208) arranged at the intersection of said cavity (102) with at least one other adjacent cavity (102).

7. The container (100) according to any one of claims 4 to 6, **characterized in that** it comprises at least three adjacent cavities (102), each cavity (102) comprising a projection (208) arranged at the intersection of said cavity (102) with the two other adjacent cavities (102).

8. The container (100) according to any one of claims 4 to 7, **characterized in that** at least one projection (208) is at least partly hollow, constituting on the outer surface of the bottom wall of said container (100) at least a part of a water outlet circuit.

9. The container (100) according to any one of the preceding claims, **characterized in that** at least one separation partition (204) is at least partly hollow, constituting on the outer surface of the bottom wall of said container (100) at least a part of a water outlet circuit.

10. The container (100) according to any one of the preceding claims, **characterized in that** at least one cavity (102) has a hexagonal cross-section.

11. The container (100) according to claims 5 and 10, **characterized in that** each cavity (102) comprises a projection (208) arranged at each corner of said hexagonal cavity (102).

12. The container (100) according to any one of the preceding claims, **characterized in that** it comprises two indentations/recesses (112, 114) arranged in two substantially opposite positions on the periphery (104, 108) of said container (100) and arranged in order to constitute an area for gripping said container (100) in order to handle it.

13. The container (100) according to any one of the preceding claims, **characterized in that** it comprises a flat base.

14. The container (100) according to any one of the preceding claims, **characterized in that** it comprises cavities (102₁, 102₂) of different size; the separation partition (204) separating two cavities (102₁, 102₂) of different sizes comprises an opening (116) for plants to pass from the smaller cavity (102₂) to the larger cavity (102₁).

15. A structure produced with containers (100) according to any one of the preceding claims.

16. Use of the container (100) according to any one of claims 1 to 14 for:
- producing an element for the temporary retention of water, for example rainwater,
- producing permanent formworks, for example on multi-purpose terraces, or
- delimiting technical access, for example when it is filled with gravel.
